# EUROPEAN PATENT APPLICATION

(11) **EP 4 847 290 A1**
(43) Date of publication of application: **02.12.2026**
(21) Application number: 25802872.9
(22) Date of filing: 12.05.2025
(51) Int. Cl.: B60K 35/28, B60W 40/06

(54) **METHOD AND APPARATUS FOR DISPLAYING LANE LINE, DASHBOARD, VEHICLE, ELECTRONIC DEVICE, AND MEDIUM**

(30) Priority: 16.05.2024 CN 202410610392
(71) Applicant: Ecarx (Hubei) Tech Co., Ltd., Wuhan, Hubei 430056 (CN)
(72) Inventor: YANG, Ganpeng, Wuhan, Hubei 430056 (CN); YIN, Qingfeng, Wuhan, Hubei 430056 (CN)
(74) Representative: Bandpay & Greuter
(86) International application number: PCT/CN2025/094203
(87) International publication number: WO 2025/237224

(57) **Abstract**

Embodiments of the present disclosure provide a method and apparatus for displaying a lane line, an instrument, a vehicle, an electronic device, and a medium. The method includes: obtaining real-time lane line data and navigation data; calculating a lane line equation of a current lane based on the lane line data; determining whether a lane line curvature corresponding to the lane line equation exceeds a maximum curvature limit range; if so, determining a road condition of the current lane based on the navigation data; modifying the lane line curvature corresponding to the lane line equation based on the road condition and the maximum curvature limit range; and displaying the current lane according to a modified lane line equation. In embodiments of the present disclosure, through adjusting the lane line curvature by setting a maximum curvature limit range of the lane line and integrating the navigation road condition, and controlling the display range of the lane line, the problem of lane line display distortion is solved, stable display of the lane line is ensured, user driving experience is improved, and driving safety is enhanced.

## Description

The present disclosure claims priority to Chinese Patent Application No. 202410610392.7, filed with the China National Intellectual Property Administration on May 16, 2024 and entitled "METHOD AND APPARATUS FOR DISPLAYING LANE LINE ON INSTRUMENT, ELECTRONIC DEVICE, AND STORAGE MEDIUM", which is incorporated herein by reference in its entirety.

### TECHNICAL FIELD

The present disclosure relates to the field of vehicle infotainment technologies and, in particular, to a method and apparatus for displaying a lane line, an instrument, an electronic device, and a medium.

### BACKGROUND

With the development of automotive technologies, vehicles are equipped with an increasing number of intelligent controllers, where the functions of intelligent driving controllers are becoming increasingly diverse. As a display terminal for the functions of the intelligent driving controllers, a full night view instrument not only needs to ensure that the functions of the intelligent driving controllers can be displayed normally, but also needs to ensure the smoothness of the display and the rationality of the displayed picture, where lane lines are one of the most commonly used functions. However, since the bending curvature recognized by an in-vehicle camera is inaccurate, and an advanced driving assistance system (Advanced Driving Assistance System, ADAS) controller transmits a lane curve equation rather than point cloud data, continuously curved roads and the like cannot be accurately depicted, resulting in frequent occurrences of problems in instrument display such as excessive bending of a lane line, extension of a lane line beyond the screen, and frequent large-angle bending of a lane line, which affects driving experience of a user and tends to distract a driver.

Therefore, how to solve the distortion of lane line display and ensure stable display of the lane line has become an important subject urgently to be solved by those skilled in the art.

### SUMMARY

In view of the defects in the existing technology, embodiments of the present invention provide a method for displaying a lane line on an instrument, an apparatus for displaying a lane line on an instrument, a vehicle instrument, a vehicle, an electronic device, and a storage medium.

According to some embodiments, a first aspect of the present disclosure provides a method for displaying a lane line on an instrument, including: obtaining real-time lane line data and navigation data; calculating a lane line equation of a current lane based on the lane line data; determining whether a lane line curvature corresponding to the lane line equation exceeds a maximum curvature limit range; if so, determining a road condition of the current lane based on the navigation data; modifying the lane line curvature corresponding to the lane line equation based on the road condition and the maximum curvature limit range; and displaying the current lane according to a modified lane line equation.

In some embodiments, the modifying the lane line curvature corresponding to the lane line equation based on the road condition and the maximum curvature limit range includes: if a current road condition is a sharp curve road condition, modifying the lane line curvature corresponding to the lane line equation to a minimum curvature limit value within the maximum curvature limit range.

In some embodiments, the modifying the lane line curvature corresponding to the lane line equation based on the road condition and the maximum curvature limit range further includes: if the current road condition is a non-sharp curve road condition, modifying the lane line curvature corresponding to the lane line equation to a maximum curvature limit value within the maximum curvature limit range.

In some embodiments, the method further includes: determining a display range of the lane line according to the lane line equation of the current lane; if the display range of the lane line exceeds a lane line display area, performing masking processing on an excess portion of the lane line.

In some embodiments, the method further includes: if the lane line curvature corresponding to the lane line equation does not exceed the maximum curvature limit range; displaying the current lane according to the lane line equation.

According to some embodiments, a second aspect of the present disclosure provides an apparatus for displaying a lane line on an instrument, including: an obtaining module, configured to obtain real-time lane line data and navigation data; a calculation module, configured to calculate a lane line equation of a current lane based on the lane line data; a determination module, configured to determine whether a lane line curvature corresponding to the lane line equation exceeds a maximum curvature limit range; a road condition determination module, configured to, if the lane line curvature corresponding to the lane line equation exceeds the maximum curvature limit range, determine a road condition of the current lane based on the navigation data; a curvature modification module, configured to modify the lane line curvature corresponding to the lane line equation based on the road condition and the maximum curvature limit range; and a display module, configured to display the current lane according to a modified lane line equation.

According to some embodiments, a third aspect of the present disclosure provides a vehicle instrument, including: an instrument middleware, configured to obtain real-time lane line data and navigation data; calculate a lane line equation of a current lane based on the lane line data; determine whether a lane line curvature corresponding to the lane line equation exceeds a maximum curvature limit range; if so, determine a road condition of the current lane based on the navigation data; modify the lane line curvature corresponding to the lane line equation based on the road condition and the maximum curvature limit range; and send a modified lane line equation to an instrument human machine interface; and the instrument human machine interface, configured to receive the modified lane line equation sent by the instrument middleware, and display the current lane according to the modified lane line equation.

According to some embodiments, a fourth aspect of the present disclosure provides a vehicle, including: a lane line acquisition apparatus, the vehicle instrument as described in the third aspect, and a navigation apparatus; where the lane line acquisition apparatus is configured to acquire real-time lane line data, and send the real-time lane line data to the vehicle instrument; the navigation apparatus is configured to send current navigation data to the vehicle instrument.

According to some embodiments, a fifth aspect of the present disclosure provides an electronic device, including: a memory and a processor, where the processor and the memory communicate with each other through a bus; the memory stores program instructions executable by the processor, and the processor calls the program instructions to implement the method for displaying a lane line on an instrument as described in any one of the first aspect.

According to some embodiments, a sixth aspect of the present disclosure provides a computer readable storage medium, which has a computer program stored thereon, and when the computer program is executed by a processor, the method for displaying a lane line on an instrument as described in any one of the first aspect is implemented.

In the method for displaying a lane line on an instrument provided by the embodiments of the present disclosure, real-time lane line data and navigation data are obtained; a lane line equation of a current lane is calculated based on the lane line data; it is determined whether a lane line curvature corresponding to the lane line equation exceeds a maximum curvature limit range; if so, a road condition of the current lane is determined based on the navigation data; the lane line curvature corresponding to the lane line equation is modified based on the road condition and the maximum curvature limit range; and the current lane is displayed according to a modified lane line equation. In the method for displaying a lane line on an instrument provided by the embodiments of the present disclosure, through adjusting the lane line curvature by setting a maximum curvature limit range of the lane line and integrating the navigation road condition, and controlling the display range of the lane line, the problem of lane line display distortion is solved, stable display of the lane line is ensured, user driving experience is improved, and driving safety is enhanced.

### BRIEF DESCRIPTION OF DRAWINGS

Accompanying drawings are incorporated into and constitute a part of the specification, illustrating embodiments consistent with the present disclosure, and used together with the specification to explain the principles of embodiments of the present disclosure.
FIG. 1 is a step flowchart of a method embodiment for displaying a lane line on an instrument of the present disclosure;
FIG. 2 is a step flowchart of another method embodiment for displaying a lane line on an instrument of the present disclosure;
FIG. 3 is a step flowchart of still another method embodiment for displaying a lane line on an instrument of the present disclosure;
FIG. 4 is a structural block diagram of an apparatus embodiment for displaying a lane line on an instrument of the present disclosure;
FIG. 5 is a structural block diagram of a vehicle instrument embodiment of the present disclosure;
FIG. 6 is a structural block diagram of a vehicle embodiment of the present disclosure;
FIG. 7 is a structural block diagram of an electronic device embodiment of the present disclosure.

The above accompanying drawings have shown explicit embodiments of the present disclosure, and more detailed descriptions will be provided in the following text. These accompanying drawings and textual descriptions are not intended to limit the scope of the disclosed concept in any way, but rather to illustrate the concept of the disclosure for those skilled in the art by referring to specific embodiments.

### DESCRIPTION OF EMBODIMENTS

In order to make the above objectives, features, and advantages of this disclosure more obvious and understandable, further detailed explanations of this disclosure will be provided below in conjunction with the accompanying drawings and specific implementation methods.

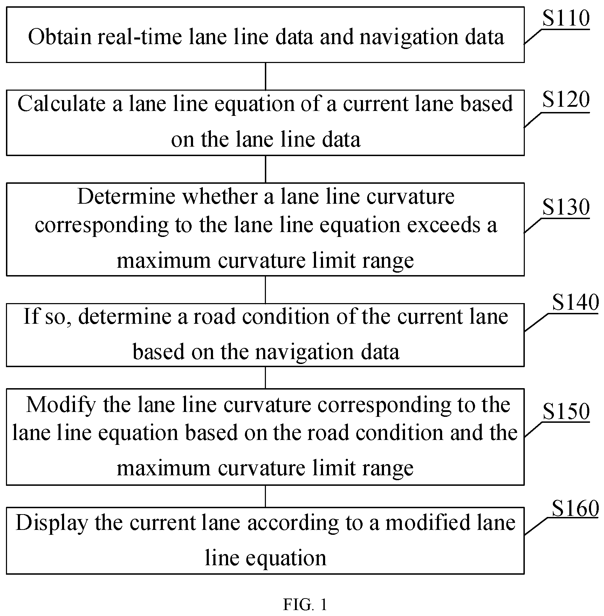

Referring to FIG. 1, a step flowchart of a method embodiment for displaying a lane line on an instrument of the present disclosure is shown, which is applied to a vehicle instrument and may specifically include the following steps:
S110: obtain real-time lane line data and navigation data.

Specifically, during a driving process of a vehicle, an lane line acquisition apparatus installed on the vehicle collects lane line data in real time. The lane line data may include lane line data of a first lane line and lane line data of a second lane line. The lane line data of the first lane line includes: a starting point, an ending point, curvature, a lane line width, the number of lane lines, a lane line color, a distance from the host vehicle to the lane line, etc. The lane data of the second lane line includes: a starting point, an ending point, curvature, a lane line width, the number of lane lines, a lane line color, a distance from the host vehicle to the lane line, etc. The lane line acquisition apparatus may include a camera and an advanced driving assistance system (Advanced Driving Assistance System, ADAS) controller, and the ADAS controller uses an image captured by a single camera of the host vehicle to recognize the lane line data of the current road.

The navigation data may be obtained through a navigation apparatus, for example, a navigation manufacturer application installed on the vehicle. The navigation data is road data mapped by the navigation manufacturer using a dedicated road mapping vehicle, including curvature, a lane line width, the number of lane lines, a type of a current road, etc. The difference between the real-time lane line data and the navigation data is that one is real-time data collected by a single camera with a relatively low collection accuracy; and the other is data surveyed by a dedicated mapping vehicle with high accuracy in road curvature, but it is pre-stored data in the cloud and cannot be updated in real time.

The instrument obtains the real-time lane line data and the navigation data through the lane line acquisition apparatus and the navigation apparatus, respectively.

S120: calculate a lane line equation of a current lane based on the lane line data.

Specifically, the lane line data sent by the lane line acquisition includes two segments of lane lines, but the actual lane lines are continuous, so these two segments of lane lines are required to be spliced. The instrument filters out interference and invalid parameters from the lane line data of the first lane line and the lane line data of the second lane line, merges them into one lane line, and calculates the actual lane line equation such as the total length and curvature of the current lane line. For the lane line equation, reference can be made to a calculation method of the lane line equation in existing technologies, which will not be repeated here.

S130: determine whether a lane line curvature corresponding to the lane line equation exceeds a maximum curvature limit range.

Specifically, the maximum curvature limit range is a limit interval of the maximum range that the instrument can display, which can be determined through actual vehicle calibration. The maximum curvature limit range includes a maximum curvature limit value and a minimum curvature limit value, that is, the maximum curvature limit range is a hysteresis interval.

For example, the range of the curvature C of the lane line that ADAS can recognize is 0-1, and the maximum curvature limit range C1 of the lane line is 0.4-0.5, then the instrument can display a curvature range of 0-C1.

After determining the lane line equation of the current lane line, the instrument obtains the curvature of the current lane line and determines whether the lane line curvature exceeds the maximum curvature limit range. For example, when the lane line curvature of the current lane line is determined to be below 0.5 through the lane line equation, it indicates that the lane line curvature of the current lane line does not exceed the maximum curvature limit range C1; when the lane line curvature of the current lane line is determined to be above 0.5 through the lane line equation, it indicates that the lane line curvature of the current lane line exceeds the maximum curvature limit range C1.

S140: if so, determine a road condition of the current lane based on the navigation data.

Specifically, if the lane line curvature exceeds the maximum curvature limit range, the lane line bends excessively, which affects the driving experience of the user. At this time, the instrument can determine the road condition of the current lane based on the navigation data. The types of the current road in the navigation data include an expressway, a national highway, a provincial highway, a county road, a winding mountain road, a sharp curve road, a narrow road, etc. The road condition of the current lane may be directly determined through the navigation data.

S150: modify the lane line curvature corresponding to the lane line equation based on the road condition and the maximum curvature limit range.

Specifically, the lane line curvature corresponding to the lane line equation is modified according to the road condition to modify the lane line curvature to within the maximum curvature limit range, avoiding the problems such as excessive bending of the lane line.

S160: display the current lane according to a modified lane line equation.

Specifically, the instrument determines display data based on the modified lane line equation and displays the current lane according to the display data.

In practical applications, the instrument may include an instrument middleware and an instrument human machine interface. The instrument middleware obtains real-time lane line data sent by ADAS, and obtains navigation data through the installed navigation application; calculates a lane line equation of a current lane based on the real-time lane line data; determines whether a lane line curvature corresponding to the lane line equation exceeds a maximum curvature limit range; if so, determines a road condition of the current lane based on the navigation data; modifies the lane line curvature corresponding to the lane line equation based on the road condition and the maximum curvature limit range; and sends a modified lane line equation to an instrument human machine interface (Human Machine Interface, HMI).

The instrument HMI receives the modified lane line equation sent by the instrument middleware, and displays the current lane according to the modified lane line equation.

In the method for displaying a lane line on an instrument provided by the embodiment of the present disclosure, real-time lane line data and navigation data are obtained; a lane line equation of a current lane is calculated based on the lane line data; it is determined whether a lane line curvature corresponding to the lane line equation exceeds a maximum curvature limit range; if so, a road condition of the current lane is determined based on the navigation data; the lane line curvature corresponding to the lane line equation is modified based on the road condition and the maximum curvature limit range; and the current lane is displayed according to a modified lane line equation. In the method for displaying a lane line on an instrument provided by the embodiment of the present disclosure, through adjusting the lane line curvature by setting a maximum curvature limit range of the lane line and integrating the navigation road condition, and controlling the display range of the lane line, the problem of lane line display distortion is solved, stable display of the lane line is ensured, user driving experience is improved, and driving safety is enhanced.

On the basis of the above embodiment, further, the modifying the lane line curvature corresponding to the lane line equation based on the road condition and the maximum curvature limit range includes:
if a current road condition is a sharp curve road condition, modifying the lane line curvature corresponding to the lane line equation to a minimum curvature limit value within the maximum curvature limit range.

Specifically, if the lane line curvature exceeds the set maximum curvature limit range, the navigation road data transmitted via the navigation data is integrated to determine whether it is a sharp curve road, such as a winding mountain road. After it is determined that the current road condition is the sharp curve road condition based on the navigation data, the instrument middleware modifies the lane line curvature to the minimum curvature limit value within the maximum curvature limit range, and adjusts the maximum curvature of the lane line to the set minimum curvature limit value. At this time, the bending of the lane line is only for illustration and does not provide real guidance, so as to prevent distracting the attention of the driver in a complex road condition.

In a practical application, when the road condition is a sharp curve, the user visually recognizes the turning situation of the current road. The curvature displayed on the instrument interface has no guiding significance. The smaller road completeness merely indicates the current road is a curve, rather than a straight one, so as to prevent distracting the attention of the driver in a complex road condition.

On the basis of the above embodiment, further, the modifying the lane line curvature corresponding to the lane line equation based on the road condition and the maximum curvature limit range further includes:
if the current road condition is a non-sharp curve road condition, modifying the lane line curvature corresponding to the lane line equation to a maximum curvature limit value within the maximum curvature limit range.

Specifically, if the lane line curvature exceeds the set maximum curvature limit range, the navigation road data transmitted via the navigation data is integrated to determine whether it is a sharp curve road, such as a winding mountain road. After it is determined that the current road condition is not the sharp curve road condition based on the navigation data, the instrument middleware modifies the lane line curvature to the maximum curvature limit value within the maximum curvature limit range. At this time, the lane line reproduces the current road information as much as possible.

For example, the range of the curvature C of the lane line that ADAS can recognize is 0-1. The maximum curvature limit range C1 of the lane line is 0.4-0.5, the curvature range that can be displayed is 0-C1.

When the lane line curvature corresponding to the lane line equation calculated from the lane line data transmitted by ADAS is less than 0.5, the calculated lane line curvature is used to display the current lane.

When the lane line curvature corresponding to the lane line equation calculated from the lane line data transmitted by ADAS is 0.51, it is determined whether it is a sharp curve road according to the navigation data. If it is a sharp curve road, the curvature of the lane line is modified to the minimum limit value of 0.4; if it is not a sharp curve road, the curvature is modified to the maximum limit value of 0.5.

The embodiment of the present disclosure combines the navigation data to flexibly switch the curvature of the lane line, which not only reduces the adverse effects of frequent and significant changes in the lane line on the driver attention under the complex road condition, but also reproduces the actual lane line of the road to a great extent.

On the basis of the above embodiment, further include:
determining a display range of the lane line according to the lane line equation of the current lane;
if the display range of the lane line exceeds a lane line display area, performing masking processing on an excess portion of the lane line.

Specifically, the lane line data with modified curvature is sent to the instrument HMI. The instrument HMI determines the display range of the lane line based on the processed lane line data and determines whether the display range exceeds the lane line display area of the instrument HMI, if there is an excess display range, the masking processing is added to prevent abnormal lane line data from extending to the screen vertex. Specifically, when the ADAS function is activated and the instrument displays the ADAS interface, the masking processing is enabled to limit the display area of ADAS. Any area beyond the display area is covered by a mask of the same color and not displayed, avoiding the lane line from extending outside the screen.

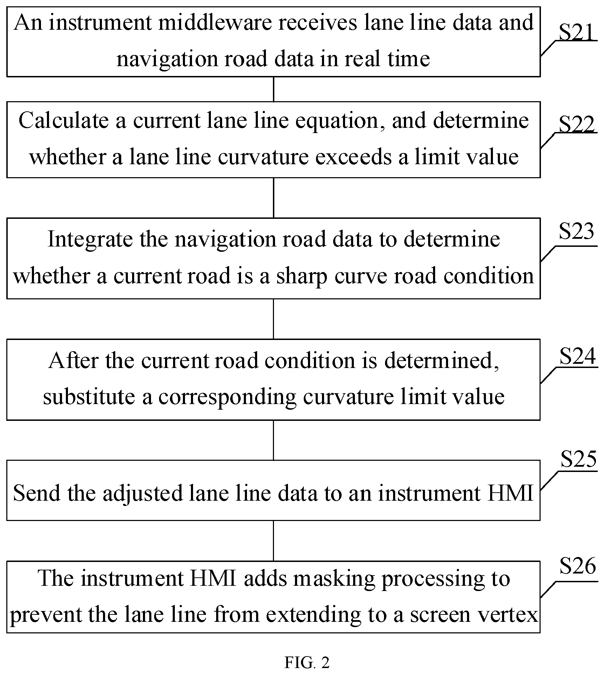

FIG. 2 is a step flowchart of another method embodiment for displaying a lane line on an instrument of the present disclosure, as shown in FIG. 2, including the following steps:
S21: an instrument middleware receives lane line data sent by an intelligent driving controller and navigation road data transmitted by a navigation system in real time.
S22: the instrument middleware calculates whether a bending curvature of a lane line at this time exceeds a set maximum limit value, and if it does not exceed the maximum limit value, sends calculated lane line data to an instrument HMI;
S23: if the lane line curvature exceeds the set maximum curvature limit range, integrate the navigation road data transmitted via the navigation data to determine whether it is a sharp curve road;
S24: if it is determined that it is a sharp curve road, modify the lane line curvature to the minimum limit value of the curvature, and adjust the maximum curvature of the lane line to the set minimum curvature; at this time, the bending of the lane line is only for illustration and does not provide real guidance, so as to prevent distracting the attention of the driver in a complex road condition; if it is determined that it is not a sharp curve road, modify the maximum curvature of the lane line to the set maximum curvature; at this time, the lane line reproduces the current road information as much as possible;
S25: send the lane line data with modified curvature to the instrument HMI;
S26: the instrument HMI displays the processed lane line data and adds masking processing, so as to prevent abnormal lane line data from extending to a screen vertex.

The embodiment of the present disclosure solves the distortion of lane line display on the ADAS and ensure stable display of the lane line by setting the maximum curvature limit range of the lane line, that is, the maximum deviation curvature of the lane line, adding masks outside the display range of the lane line, performing comprehensive computation of dynamically adjusting the curvature in frequent bending scenarios determined by integrating the navigation road condition, controlling the display range of the lane line, and performing special road condition processing for mountain roads.

On the basis of the above embodiment, further include:
if the lane line curvature corresponding to the lane line equation does not exceed the maximum curvature limit range;
displaying the current lane based on the lane line equation.

Specifically, if the lane line curvature does not exceed the maximum curvature limit range, the calculated lane line data will be sent to the instrument HMI. For example, if the limit value of the lane line curvature is 0.05, and if this value is exceeded, the lane line will bend excessively; if the current given value is 0.04, then this curvature will be used to draw the lane line.

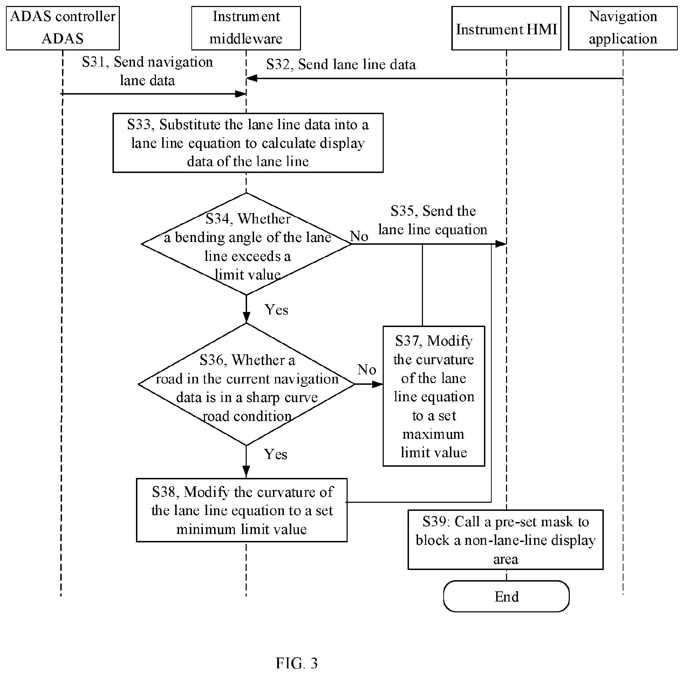

FIG. 3 is a step flowchart of still another method embodiment for displaying a lane line on an instrument of the present disclosure, as shown in FIG. 3, the method includes:
S31: a navigation application sends navigation lane data to an instrument middleware;
S32: an ADAS controller sends lane line data to the instrument middleware;
S33: the instrument middleware substitutes the lane line data into a lane line equation to calculate display data of the lane line;
S34: the instrument middleware determines whether a bending angle (curvature) of the lane line exceeds a limit value; if so, performs S36; otherwise, performs S35;
S35: the instrument middleware sends the lane line equation to the instrument HMI;
S36: the instrument middleware determines whether a road in the current navigation data is in a sharp curve road condition; if so, performs S38; otherwise, performs S37;
S37, the instrument middleware modifies the curvature of the lane line equation to a set maximum limit value, and performs S35;
S38, the instrument middleware modifies the curvature of the lane line equation to a set minimum limit value, and performing S35;
S39: the instrument HMI calls a pre-set mask to block a non-lane-line display area.

The method for displaying a lane line on an instrument provided in the embodiment of the present disclosure calculates the actual scene of the current lane by combining three methods of the navigation road data, the lane line data from the intelligent driving controller, and the HMI masking processing, and the maximum curvature of the lane line is flexibly switched, which not only reduces the adverse effects of frequent and significant changes in the lane line on the driver attention under the complex road condition, but also reproduces the actual lane line of the road to a great extent.

It should be noted that for the sake of simplicity, the method embodiments are described as a series of action combinations. However, those skilled in the art should be aware that embodiments of the present disclosure are not limited by the order of the described actions, as certain steps may be performed in other orders or simultaneously according to embodiments of the present disclosure. Secondly, those skilled in the art should also be aware that the embodiments described in the specification are all preferred embodiments, and the actions involved are not necessarily required for the embodiments of the present disclosure.

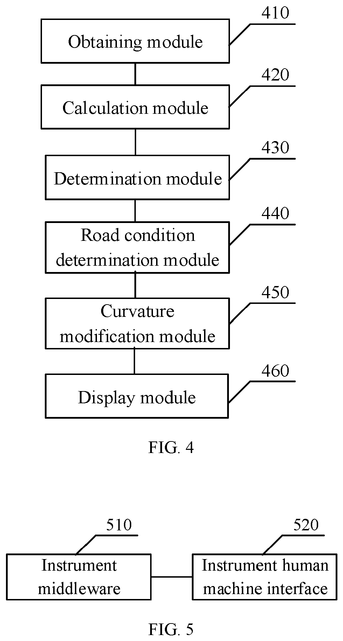

Referring to FIG. 4, it illustrates a structural block diagram of an apparatus embodiment for displaying a lane line on an instrument of the present disclosure, which may specifically include the following modules:
an obtaining module 410, configured to obtain real-time lane line data and navigation data;
a calculation module 420, configured to calculate a lane line equation of a current lane based on the lane line data;
a determination module 430, configured to determine whether a lane line curvature corresponding to the lane line equation exceeds a maximum curvature limit range;
a road condition determination module 440, configured to, if the lane line curvature corresponding to the lane line equation exceeds the maximum curvature limit range, determine a road condition of the current lane based on the navigation data;
a curvature modification module 450, configured to modify the lane line curvature corresponding to the lane line equation based on the road condition and the maximum curvature limit range;
a display module 460, configured to display the current lane based on a modified lane line equation.

For the apparatus as described above, optionally, the curvature modification module 450 is specifically configured to:
if a current road condition is a sharp curve road condition, modify the lane line curvature corresponding to the lane line equation to a minimum curvature limit value within the maximum curvature limit range.

For the apparatus as described above, optionally, the curvature modification module 450 is specifically configured to:
if the current road condition is a non-sharp curve road condition, modify the lane line curvature corresponding to the lane line equation to a maximum curvature limit value within the maximum curvature limit range.

The apparatus as described above, optionally, further includes:
a mask module, configured to: determine a display range of the lane line according to the lane line equation of the current lane; and if the display range of the lane line exceeds a lane line display area, perform masking processing on an excess portion of the lane line.

For the apparatus as described above, optionally, the display module 460 is further configured to:
if the lane line curvature corresponding to the lane line equation does not exceed the maximum curvature limit range;
display the current lane based on the lane line equation.

For the apparatus embodiment, as it is basically similar to the method embodiment, the description is relatively simple. Please refer to portions of the description of the method embodiment for relevant information, which will not be repeated here.

Referring to FIG. 5, it illustrates a structural block diagram of a vehicle instrument embodiment of the present disclosure, which may specifically include:
an instrument middleware 510, configured to obtain real-time lane line data and navigation data; calculate a lane line equation of a current lane based on the lane line data; determine whether a lane line curvature corresponding to the lane line equation exceeds a maximum curvature limit range; if so, determine a road condition of the current lane based on the navigation data; modify the lane line curvature corresponding to the lane line equation based on the road condition and the maximum curvature limit range; and send a modified lane line equation to an instrument human machine interface 520; and
the instrument human machine interface 520, configured to receive the modified lane line equation sent by the instrument middleware, and display the current lane according to the modified lane line equation.

For the vehicle instrument embodiment, as it is basically similar to the method embodiment, the description is relatively simple. Please refer to portions of the description of the method embodiments for relevant information, which will not be repeated here.

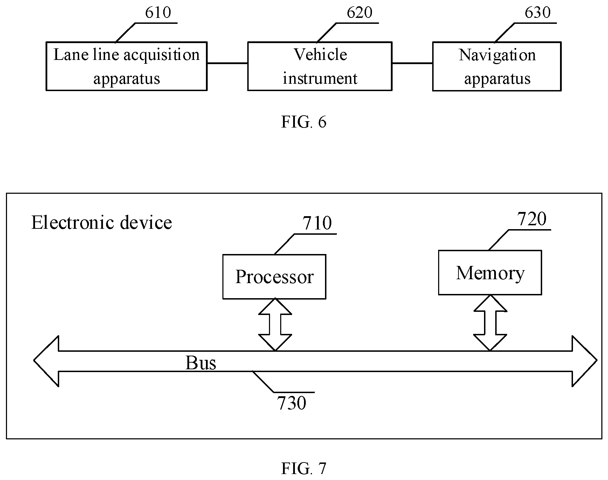

Referring to FIG. 6, it illustrates a structural block diagram of a vehicle embodiment of the present disclosure, which may specifically include:
a lane line acquisition apparatus 610, a vehicle instrument 620, and a navigation apparatus 630;
where the lane line acquisition apparatus 610 is configured to collect real-time lane line data, and send the real-time lane line data to the vehicle instrument 620;
the navigation apparatus 630 is configured to send current navigation data to the vehicle instrument 620.

The vehicle instrument 620 includes an instrument middleware 510 and an instrument human machine interface 520; the instrument middleware 510 is configured to obtain real-time lane line data and navigation data; calculate a lane line equation of a current lane based on the lane line data; determine whether a lane line curvature corresponding to the lane line equation exceeds a maximum curvature limit range; if so, determine a road condition of the current lane based on the navigation data; modify the lane line curvature corresponding to the lane line equation based on the road condition and the maximum curvature limit range; and send a modified lane line equation to an instrument human machine interface 520;
the instrument human machine interface 520 is configured to receive the modified lane line equation sent by the instrument middleware, and display the current lane according to the modified lane line equation.

For the vehicle embodiment, as it is basically similar to the method embodiment, the description is relatively simple. Please refer to portions of the description of the method embodiments for relevant information, which will not be repeated here.

Referring to FIG. 7, it illustrates a structural block diagram of an electronic device embodiment of the present disclosure, and the device includes: a processor (processor) 710, a memory (memory) 720, and a bus 730;
where the processor 710 and the memory 720 communicate with each other through the bus 730;
the processor 710 is configured to call program instructions in the memory 720 to implement the methods provided in the above described method embodiments, for example including: obtaining real-time lane line data and navigation data; calculating a lane line equation of a current lane based on the lane line data; determining whether a lane line curvature corresponding to the lane line equation exceeds a maximum curvature limit range; if so, determining a road condition of the current lane based on the navigation data; modifying the lane line curvature corresponding to the lane line equation based on the road condition and the maximum curvature limit range; and displaying the current lane according to a modified lane line equation.

An embodiment of the present disclosure discloses a computer program product, the computer program product includes a computer program stored on a non-transitory computer readable storage medium, the computer program includes program instructions, when the program instructions are executed by a computer, the computer is enabled to implement the methods provided in the above described method embodiments, for example including: obtaining real-time lane line data and navigation data; calculating a lane line equation of a current lane based on the lane line data; determining whether a lane line curvature corresponding to the lane line equation exceeds a maximum curvature limit range; if so, determining a road condition of the current lane based on the navigation data; modifying the lane line curvature corresponding to the lane line equation based on the road condition and the maximum curvature limit range; and displaying the current lane according to a modified lane line equation.

An embodiment of the present disclosure provides a non-transitory computer readable storage medium storing computer instructions, and the computer instructions enable the computer to implement the methods provided in the above described method embodiments, for example including: obtaining real-time lane line data and navigation data; calculating a lane line equation of a current lane based on the lane line data; determining whether a lane line curvature corresponding to the lane line equation exceeds a maximum curvature limit range; if so, determining a road condition of the current lane based on the navigation data; modifying the lane line curvature corresponding to the lane line equation based on the road condition and the maximum curvature limit range; and displaying the current lane according to a modified lane line equation.

The various embodiments in the specification are described in a progressive manner, with each embodiment emphasizing its differences from other embodiments. For the same and similar parts between the various embodiments, reference can be made to each other.

Person skilled in the art should understand that embodiments of the present disclosure may be provided as a method, an apparatus, or a computer program product. Therefore, embodiments of the present disclosure may take a form of a fully hardware embodiment, a fully software embodiment, or a combination of software and hardware embodiment. Moreover, embodiments of the present disclosure may take a form of a computer program product implemented on one or more computer usable storage media (including but not limited to a disk storage, a CD-ROM, an optical storage, etc.) including computer usable program code.

Embodiments of the present disclosure are described with reference to the flowchart and/or block diagram of the method, terminal device (system), and computer program product according to embodiments of the present disclosure. It should be understood that each process and/or block in the flowchart and/or block diagram, as well as the combination of process and/or block in the flowchart and/or block diagram, can be implemented by computer program instructions. These computer program instructions can be provided to a processor of a general purpose computer, special purpose computer, embedded processor, or other programmable data processing terminal device to generate a machine, such that the instructions executed by the processor of the computer or other programmable data processing terminal device generate an apparatus for implementing the function specified in one or more processes in the flowchart and/or one or more blocks in the block diagram.

These computer program instructions may also be stored in a computer-readable memory that can guide a computer or other programmable data processing terminal device to operate in a specific manner, such that the instructions stored in the computer-readable memory generate an article of manufacture including an instruction apparatus, and the instruction apparatus implements the function specified in one or more processes of the flowchart and/or one or more blocks of the block diagram.

These computer program instructions may also be loaded onto a computer or other programmable data processing terminal device, enabling a series of operating steps to be executed on the computer or other programmable terminal device to generate computer implemented processing; and thus, the instructions executed on the computer or other programmable terminal device provide steps for implementing the function specified in one or more process of the flowchart and/or one or more block of the block diagram.

Although preferred embodiments of the present disclosure have been described, those skilled in the art may make additional changes and modifications to these embodiments once they have knowledge of the basic inventive concept. Therefore, the appended claims are intended to be interpreted as including preferred embodiments and all changes and modifications falling within the scope of the embodiments of the present disclosure.

Finally, it should be noted that in this article, relational terms such as first and second are only used to distinguish one entity or operation from another, and do not necessarily require or imply any actual relationship or order between these entities or operations. Moreover, the terms "including", "containing", or any other variation thereof are intended to encompass non-exclusive inclusion, such that a process, method, article, or terminal device that includes a series of elements not only includes those elements, but also includes other elements not explicitly listed, or also includes elements inherent to such process, method, article, or terminal device. Without further limitations, the element defined by the statement "including a..." does not exclude the existence of other identical element in the process, method, item, or terminal device that includes this element.

The above provides a detailed introduction to the method for displaying a lane line on an instrument, the apparatus for displaying a lane line on an instrument, the electronic device, and the storage medium provided in the present disclosure. Specific examples are employed herein to explain the principles and implementations of the present disclosure, and the descriptions of the above embodiments are only used to help understand the method and core idea of the present disclosure. Meanwhile, for general person skilled in the art, there may be changes in the specific implementation and application scope in accordance with the present disclosure. In summary, the content of the specification should not be understood as limiting the present disclosure.

## Claims

1. A method for displaying a lane line on an instrument, comprising:
obtaining real-time lane line data and navigation data;
calculating a lane line equation of a current lane based on the lane line data;
determining whether a lane line curvature corresponding to the lane line equation exceeds a maximum curvature limit range;
if so, determining a road condition of the current lane based on the navigation data;
modifying the lane line curvature corresponding to the lane line equation based on the road condition and the maximum curvature limit range; and
displaying the current lane based on a modified lane line equation.

2. The method according to claim 1, wherein the modifying the lane line curvature corresponding to the lane line equation based on the road condition and the maximum curvature limit range comprises:
if a current road condition is a sharp curve road condition, modifying the lane line curvature corresponding to the lane line equation to a minimum curvature limit value within the maximum curvature limit range.

3. The method according to claim 2, wherein the modifying the lane line curvature corresponding to the lane line equation based on the road condition and the maximum curvature limit range further comprises:
if the current road condition is a non-sharp curve road condition, modifying the lane line curvature corresponding to the lane line equation to a maximum curvature limit value within the maximum curvature limit range.

4. The method according to claim 1, further comprising:
determining a display range of the lane line according to the lane line equation of the current lane;
if the display range of the lane line exceeds a lane line display area, performing masking processing on an excess portion of the lane line.

5. The method according to any one of claims 1 to 4, further comprising:
if the lane line curvature corresponding to the lane line equation does not exceed the maximum curvature limit range;
displaying the current lane based on the lane line equation.

6. An apparatus for displaying a lane line on an instrument, comprising:
an obtaining module, configured to obtain real-time lane line data and navigation data;
a calculation module, configured to calculate a lane line equation of a current lane based on the lane line data;
a determination module, configured to determine whether a lane line curvature corresponding to the lane line equation exceeds a maximum curvature limit range;
a road condition determination module, configured to, if the lane line curvature corresponding to the lane line equation exceeds the maximum curvature limit range, determine a road condition of the current lane based on the navigation data;
a curvature modification module, configured to modify the lane line curvature corresponding to the lane line equation based on the road condition and the maximum curvature limit range; and
a display module, configured to display the current lane based on a modified lane line equation.

7. A vehicle instrument, comprising:
an instrument middleware, configured to obtain real-time lane line data and navigation data; calculate a lane line equation of a current lane based on the lane line data; determine whether a lane line curvature corresponding to the lane line equation exceeds a maximum curvature limit range; if so, determine a road condition of the current lane based on the navigation data; modify the lane line curvature corresponding to the lane line equation based on the road condition and the maximum curvature limit range; and send a modified lane line equation to an instrument human machine interface; and
the instrument human machine interface, configured to receive the modified lane line equation sent by the instrument middleware, and display the current lane according to the modified lane line equation.

8. A vehicle, comprising: a lane line acquisition apparatus, a vehicle instrument according to claim 7, and a navigation apparatus;
wherein the lane line acquisition apparatus is configured to collect real-time lane line data, and send the real-time lane line data to the vehicle instrument;
the navigation apparatus is configured to send current navigation data to the vehicle instrument.

9. An electronic device, comprising:
a memory and a processor, wherein the processor and the memory communicate with each other through a bus; the memory stores program instructions executable by the processor, and the processor calls the program instructions to implement the method according to any one of claims 1 to 5.

10. A computer readable storage medium storing a computer program, which, when executed by a processor, implements the method according to any one of claims 1 to 5.
